# EUROPÄISCHE PATENTSCHRIFT

(11) **EP 4 367 544 B1**
(45) Veröffentlichungstag und Bekanntmachung des Hinweises auf die Patenterteilung: **26.03.2025**
(21) Anmeldenummer: 22734000.7
(22) Anmeldetag: 23.06.2022
(51) Int. Cl.: G02B 7/00, B60Q 1/04, F21S 41/255, G02B 9/34, G02B 13/00, G02B 13/18, G02B 19/00, G02B 27/18

(54) **BELEUCHTUNGSVORRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(30) Priorität: 07.07.2021 EP 21184312
(43) Veröffentlichungstag der Anmeldung: 15.05.2024
(73) Patentinhaber: ZKW Group GmbH, 3250 Wieselburg (AT)
(72) Erfinder: LARIMIAN, Reza, 1140 Wien (AT); MIEDLER, Stefan, 3105 Unterradlberg (AT); KIM, Kyungseung, Gimpo-si Gyeonggi-do 10073 (KR); LEE, Jiyeon, Seoul 07522 (KR); JEOUNG, Byungwoo, Seoul 08090 (KR)
(74) Vertreter: Patentanwaltskanzlei Matschnig & Forsthuber OG
(86) Internationale Anmeldenummer: PCT/EP2022/067098
(87) Internationale Veröffentlichungsnummer: WO 2023/280578

(56) Entgegenhaltungen:
- WO-A1-2021/123459
- CN-A- 112 882 211
- US-A1- 2013 128 084
- US-A1- 2017 234 497
- US-A1- 2022 229 270

## Beschreibung

Die Erfindung betrifft eine Beleuchtungsvorrichtung für einen Kraftfahrzeugscheinwerfer, wobei die Beleuchtungsvorrichtung zumindest eine Lichtquelle und ein Projektionslinsensystem umfasst, welches Projektionslinsensystem eingerichtet ist, das Licht der zumindest einen Lichtquelle in Form einer Lichtverteilung vor die Beleuchtungsvorrichtung in eine Hauptabstrahlrichtung zu projizieren, wobei das Projektionslinsensystem einen gemeinsamen Brennpunkt aufweist, wobei die zumindest eine Lichtquelle in dem gemeinsamen Brennpunkt angeordnet ist.

Die Erfindung betrifft ebenso einen Kraftfahrzeugscheinwerfer mit zumindest einer erfindungsgemäßen Beleuchtungsvorrichtung.

Ein Projektionslinsensystem, insbesondere für ein hochauflösendes Projektionslinsensystem, soll ein achromatisches und/oder thermisch robustes Verhalten aufweisen. Es besteht in der Regel aus mehreren Einzellinsen oder erfordert sehr teure und schwierig zu bearbeitende Materialien, um vorhin erwähnte Eigenschaften zu gewährleisten.

Im Allgemeinen werden hochauflösende Projektionsobjektive für Fahrzeuge aufgrund der hohen Kosten von Glasmaterialien bevorzugt aus Kunststoff (sphärische/asphärische Linsen) gefertigt. Kunststoffmaterialien sind dabei hauptsächlich PC (Polycarbonat) und PMMA (Polymethylmethacrylat). Bei diesen Kunststoffen ist es jedoch schwierig, ein achromatisches und thermisch robustes Verhalten zu gewährleisten, da der Brechungsindex und die Abbe-Zahl begrenzt sind und auch die Entspiegelung ein Problem darstellen kann, was zu einer geringeren optischen Effizienz führt.

Darüber hinaus ist es schwierig, die optische Leistung über einen weiten Temperaturbereich mit der Kombination von Kunststofflinsen zu gewährleisten. Da Kunststoffmaterialien in der Regel stark von Temperaturschwankungen betroffen sind, tritt ein thermisches Driftphänomen auf, das den Fokus des optischen Systems verändert, und die Bildqualität (Kontrast) des Strahlenmusters nimmt entsprechend ab.

Werden optische Systeme in großen Temperaturbereichen eingesetzt, so können sich Brechzahlen und Abstände der einzelnen Linsen zueinander derart ändern, dass die Abbildungsleistung deutlich abnimmt, wobei bei solchen thermischen Effekten in der Regel das abzubildende Objekt defokussiert wird, wie erwähnt.

Die chromatischen und thermischen Abhängigkeiten sind bei Kunststoffen meistens deutlich stärker als bei Gläsern und im Fall der thermisch bedingten Änderung um ein Vielfaches über den Werten von Gläsern. Damit ist dies ein sehr wichtiger Parameter, da im Automotivbereich Temperaturschwankungen von -40 bis 120°C vorherrschen.

Der Stand der Technik ist durch folgende Dokument repräsentiert: WO 2021/123459 A1, US 2017/234497 A1, CN 112 882 211 A.

Es ist eine Aufgabe der Erfindung eine verbesserte Beleuchtungsvorrichtung bereitzustellen. Diese Aufgabe wird dadurch gelöst, dass die eingangs genannte Beleuchtungsvorrichtung Folgendes umfasst:
- ein Projektionslinsensystem bestehend aus Folgendem:
   - eine erste Linse mit einem ersten Brennpunkt, welche erste Linse asphärisch und aus Präzisionsglas mittels Präzisionsglasformen hergestellt ist und gesehen in Hauptabstrahlrichtung unmittelbar nach der zumindest einen Lichtquelle im Strahlengang der zumindest einen Lichtquelle angeordnet ist, wobei die erste Linse eine konvexe Auskoppelfläche und eine konkave Einkoppelfläche zur Erhöhung der Lichteinkopplung aufweist, und wobei die erste Linse eingerichtet ist, das Licht der zumindest einen Lichtquelle in Richtung der Hauptabstrahlrichtung zu kollimieren, wobei die erste Linse einen Brechungsindex von n ≥ 1,8 aufweist,
   - eine zweite Linse mit einem zweiten Brennpunkt, welche zweite Linse gesehen in Hauptabstrahlrichtung unmittelbar nach der ersten Linse angeordnet ist und als sphärische bikonvexe Sammellinse ausgebildet ist, wobei die zweite Linse aus Glas mittels Glasschleifen hergestellt ist und eine Abbe-Zahl größer als 60 aufweist,
   - eine dritte Linse, welche gesehen in Hauptabstrahlrichtung unmittelbar nach der zweiten Linse angeordnet ist und als asphärische, bikonkave Linse aus Kunststoff ausgebildet ist, wobei die dritte Linse eine Abbe-Zahl von kleiner als 25 aufweist,
   - eine vierte Linse mit einem dritten Brennpunkt, welche vierte Linse gesehen in Hauptabstrahlrichtung unmittelbar nach der dritten Linse angeordnet ist und als asphärische, bikonvexe Sammellinse aus Kunststoff ausgebildet ist, und
   - eine Blende, welche zwischen der dritten und vierten Linse angeordnet ist, wobei die Blende eingerichtet ist, von der dritten Linse in Richtung der vierten Linse abgestrahltes Licht teilweise abzuschirmen, sodass die Blende bei der Ausbildung der Lichtverteilung vor die Beleuchtungsvorrichtung mitwirkt,

wobei die zweite und dritte Linse derart eingerichtet sind, um als achromatisches Linsenpaar zur Vermeidung von chromatischer Aberration zusammenzuwirken,
und wobei die dritte und die vierte Linse im Wesentlichen einen gleichen Wärmeausdehnungskoeffizienten aufweisen, wobei die dritte und vierte Linse eingerichtet sind, um als athermisches Linsenpaar zur Vermeidung einer Verschiebung des gemeinsamen Brennpunktes bei unterschiedlichen Temperaturen zusammenzuwirken.

Dadurch, dass die erste Linse, welche der zumindest einen Lichtquelle am nächsten ist, durch Präzisionsglasformen hergestellt ist, weist diese eine besonders hohe Robustheit im Sinne von geringen Größen- bzw. Eigenschaftsänderungen bei hohen Temperaturen bzw. Temperaturschwankungen auf.

Es sei angemerkt, dass die dritte Linse ebenfalls einen Brennpunkt aufweist, welcher jedoch ein negativer Brennpunkt ist.

Der gemeinsame Brennpunkt ist ein resultierender Gesamtbrennpunkt der Projektionsoptik durch Kombination der einzelnen Brennpunkte der ersten, zweiten, dritten und vierten Linse, wobei die einzelnen Brennpunkte in ihrer Position unterschiedlich sind.

Aufgrund dessen kann die zweite Linse mittels Glasschleifen hergestellt werden, was prinzipiell eine gängige Methode ist, um Glaslinsen zu fertigen, wobei dies nicht dieselben hohen Anforderungen entspricht, wie die erste Linse, welche mittels Präzisionsglasformen hergestellt wurde. Die dritte und die vierte Linse können, da diese nun einen ausreichenden Abstand zur zumindest einen Lichtquelle aufweisen, aus Kunststoff gefertigt sein, welches im Vergleich zu Glas ein kostengünstigeres Material ist.

Dadurch kann das gesamte Projektionslinsensystem nicht nur kostengünstiger hergestellt, sondern auch leichter konzipiert werden. Darüber hinaus ist auch die Toleranzkette der Linsen zueinander um ein Vielfaches minimiert, da die erste Linse, welche eingerichtet ist, möglichst viel Licht von der zumindest einen Lichtquelle einzufangen und zu kollimieren, aufgrund ihrer Eigenschaft (auch aufgrund der großen Brechzahl) eine einzige Linse ist, im Gegensatz zum Stand der Technik, welcher in der Regel mindestens drei oder mehr Linsen benötigt.

Die erste und die zweite Linse sind aus Glas hergestellt, da diese am nächsten zur zumindest einen Lichtquelle sind und aufgrund des Materials Glas eine geringe thermale Ausdehnung aufweisen.

Das Präzisionsglasformen ist ein Replikationsverfahren, das die Herstellung hochpräziser optischer Komponenten aus Glas ohne Schleifen und Polieren ermöglicht. Das Verfahren wird auch als hochpräzises Glaspressen bezeichnet.

Ferner kann vorgesehen sein, dass die zumindest eine Lichtquelle eine Lambert'sche Strahlungscharakteristik aufweist.

Es kann vorgesehen sein, dass die dritte Linse aus PC oder PMMA hergestellt ist.

Es kann vorgesehen sein, dass die vierte Linse aus PC oder PMMA hergestellt ist.

Es kann vorgesehen sein, dass die zweite, dritte und vierte Linse einen Brechungsindex von n ≤ 1,7 aufweisen.

Es kann vorgesehen sein, dass die zweite Linse eine Abbe-Zahl von 60 aufweist, und wobei die dritte Linse eine Abbe-Zahl von 23 aufweist.

Es kann vorgesehen sein, dass die zweite Linse eine höhere Abbe-Zahl als die dritte Linse aufweist, wobei vorzugsweise die zweite Linse eine höhere Abbe-Zahl als die dritte Linse im Verhältnis 1:2.5, insbesondere 1:3, aufweist.

Es kann vorgesehen sein, dass die Blende eine Öffnung aufweist, durch welche Licht durchtreten kann.

Es kann vorgesehen sein, dass eine also hochauflösende Projektions-Beleuchtungsvorrichtung ausgebildet ist.

Es kann vorgesehen sein, dass die Lichtverteilung eine Abblendlichtverteilung und/oder eine Fernlichtverteilung ist.

Es kann vorgesehen sein, dass die zumindest eine Lichtquelle als mehrere Leuchtdioden ausgebildet ist, welche vorzugsweise in einer Matrix-Anordnung in Reihen und Spalten angeordnet sind.

Die Leuchtdioden können dabei unabhängig voneinander ansteuerbar sein mittels einer Steuereinrichtung, wobei vorzugsweise die Leuchtdioden unabhängig voneinander ein- und ausschaltbar und dimmbar sind.

Es kann vorgesehen sein, dass die erste, zweite, dritte und vierte Linse jeweils eine optische Achse aufweisen, wobei die optischen Achsen der Linsen auf einer gemeinsamen optischen Achse liegen bzw. zusammenfallen.

Die Aufgabe wird ebenso gelöst durch einen Kraftfahrzeugscheinwerfern mit zumindest einer erfindungsgemäßen Beleuchtungsvorrichtung.

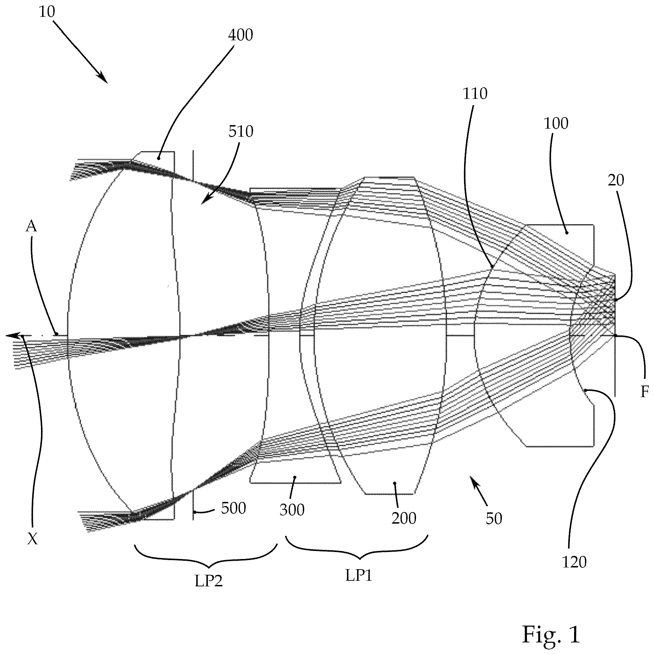

Nachfolgend wird die Erfindung anhand von beispielhaften Zeichnungen näher erläutert. Hierbei zeigt
Fig. 1 eine erfindungsgemäße Beleuchtungsvorrichtung, welche eine Lichtquelle und ein das Licht der Lichtquelle projizierendes Projektionslinsensystem umfasst.

**Fig. 1** zeigt eine beispielhafte Beleuchtungsvorrichtung **10** für einen Kraftfahrzeugscheinwerfer, wobei die Beleuchtungsvorrichtung **10** eine Lichtquelle **20** und ein Projektionslinsensystem **50** umfasst, welches Projektionslinsensystem **50** eingerichtet ist, das Licht der Lichtquelle **20** in Form einer Lichtverteilung vor die Beleuchtungsvorrichtung **10** in eine Hauptabstrahlrichtung X zu projizieren, wobei das Projektionslinsensystem **50** einen gemeinsamen Brennpunkt **F** aufweist, wobei die zumindest eine Lichtquelle **20** in dem gemeinsamen Brennpunkt **F** angeordnet ist. Die Beleuchtungsvorrichtung **10** ist dabei als hochauflösende Projektions-Beleuchtungsvorrichtung ausgebildet.

Das Projektionslinsensystem **50** besteht dabei aus einer ersten Linse **100** mit einem ersten Brennpunkt, welche erste Linse **100** asphärisch und aus Präzisionsglas mittels Präzisionsglasformen hergestellt ist und gesehen in Hauptabstrahlrichtung **X** unmittelbar nach der Lichtquelle **20** im Strahlengang der Lichtquelle **20** angeordnet ist, wobei die erste Linse **100** eine konvexe Auskoppelfläche **110** und eine konkave Einkoppelfläche **120** zur Erhöhung der Lichteinkopplung des Lichts der Lichtquelle **20** aufweist, und wobei die erste Linse **100** eingerichtet ist, das Licht der Lichtquelle **20** in Richtung der Hauptabstrahlrichtung **X** zu kollimieren, wobei die erste Linse **100** einen Brechungsindex von n ≥ 1,8 aufweist.

Die Lichtquelle **20** weist dabei eine Lambert'sche Strahlungscharakteristik auf und ist in dem gezeigten Beispiel als mehrere Leuchtdioden ausgebildet ist, welche in einer Matrix-Anordnung in Reihen und Spalten angeordnet sind.

Das Projektionslinsensystem **50** besteht weiters aus einer zweiten Linse **200** mit einem zweiten Brennpunkt, welche zweite Linse **200** gesehen in Hauptabstrahlrichtung **X** unmittelbar nach der ersten Linse **100** angeordnet ist und als sphärische bikonvexe Sammellinse ausgebildet ist, wobei die zweite Linse **200** aus Glas mittels Glasschleifen hergestellt ist und eine Abbe-Zahl von 60 aufweist.

Ferner besteht das Projektionslinsensystem **50** aus einer dritten Linse **300** mit einem dritten Brennpunkt, welche dritte Linse **300** gesehen in Hauptabstrahlrichtung **X** unmittelbar nach der zweiten Linse **200** angeordnet ist und als asphärische, bikonkave Linse aus Kunststoff ausgebildet ist, wobei die dritte Linse **300** eine Abbe-Zahl von 23 aufweist. Die dritte Linse **300** kann beispielsweise aus PC oder PMMA Kunststoff hergestellt sein.

Das Projektionslinsensystem **50** besteht weiters aus einer vierten Linse **400** mit einem vierten Brennpunkt, welche vierte Linse **400** gesehen in Hauptabstrahlrichtung **X** unmittelbar nach der dritten Linse **300** angeordnet ist und als asphärische, bikonvexe Sammellinse aus Kunststoff ausgebildet ist. Die vierte Linse **400** kann beispielsweise aus PC oder PMMA Kunststoff hergestellt sein.

Beispielsweise können die dritte und die vierte Linse **300, 400** aus PC oder PMMA hergestellt sein. Es kann auch vorgesehen sein, dass die dritte Linse **300** aus PC und die vierte Linse **400** aus PMMA hergestellt ist - oder umgekehrt.

Darüber hinaus besteht das Projektionslinsensystem **50** aus einer Blende **500,** welche zwischen der dritten und vierten Linse **300, 400** angeordnet ist, wobei die Blende **500** eingerichtet ist, von der dritten Linse **300** in Richtung der vierten Linse **400** abgestrahltes Licht teilweise abzuschirmen, sodass die Blende **500** bei der Ausbildung der Lichtverteilung vor die Beleuchtungsvorrichtung **10** mitwirkt. Dabei weist die Blende **500** eine Öffnung **510** auf, durch welche Öffnung **510** zumindest teilweise Licht, welches von der dritten Linse **300** in Richtung der vierten Linse **400** abgestrahlt wird, durchtreten kann.

Beispielsweise ist die Lichtverteilung eine Abblendlichtverteilung und/oder eine Fernlichtverteilung.

Ferner sind die zweite und dritte Linse **200, 300** derart eingerichtet, um als achromatisches Linsenpaar **LP1** zur Vermeidung von chromatischer Aberration zusammenzuwirken.

Die dritte und die vierte Linse **300, 400** weisen im Wesentlichen einen gleichen Wärmeausdehnungskoeffizienten auf, wobei die dritte und vierte Linse **300, 400** eingerichtet sind, um als athermisches Linsenpaar **LP2** zur Vermeidung einer Verschiebung des gemeinsamen Brennpunktes **F** bei unterschiedlichen Temperaturen zusammenzuwirken.

Weiters weisen die zweite, dritte und vierte Linse **200, 300, 400** einen Brechungsindex von n ≤ 1,7 auf.

Darüber hinaus weisen die erste, zweite, dritte und vierte Linse **100, 200, 300, 400** jeweils eine optische Achse auf, wobei die optischen Achsen der Linsen **100, 200, 300, 400** auf einer gemeinsamen optischen Achse **A** liegen bzw. zusammenfallen, wie in **Fig. 1** dargestellt.

## Patentansprüche

1. Beleuchtungsvorrichtung (10) für einen Kraftfahrzeugscheinwerfer, wobei die Beleuchtungsvorrichtung (10) zumindest eine Lichtquelle (20) und ein Projektionslinsensystem (50) umfasst, welches Projektionslinsensystem (50) eingerichtet ist, das Licht der zumindest einen Lichtquelle (20) in Form einer Lichtverteilung vor die Beleuchtungsvorrichtung (10) in eine Hauptabstrahlrichtung (X) zu projizieren, wobei das Projektionslinsensystem (50) einen gemeinsamen Brennpunkt (F) aufweist, wobei die zumindest eine Lichtquelle (20) in dem gemeinsamen Brennpunkt (F) angeordnet ist, und wobei das Projektionslinsensystem (50) aus Folgendem besteht:
- eine erste Linse (100) mit einem ersten Brennpunkt, welche erste Linse (100) asphärisch und aus Präzisionsglas mittels Präzisionsglasformen hergestellt ist und gesehen in Hauptabstrahlrichtung (X) unmittelbar nach der zumindest einen Lichtquelle (20) im Strahlengang der zumindest einen Lichtquelle (20) angeordnet ist, wobei die erste Linse (100) eine konvexe Auskoppelfläche (110) und eine konkave Einkoppelfläche (120) zur Erhöhung der Lichteinkopplung aufweist, und wobei die erste Linse (100) eingerichtet ist, das Licht der zumindest einen Lichtquelle (20) in Richtung der Hauptabstrahlrichtung (X) zu kollimieren, wobei die erste Linse (100) einen Brechungsindex von n ≥ 1,8 aufweist,
- eine zweite Linse (200) mit einem zweiten Brennpunkt, welche zweite Linse (200) gesehen in Hauptabstrahlrichtung (X) unmittelbar nach der ersten Linse (100) angeordnet ist und als sphärische bikonvexe Sammellinse ausgebildet ist, wobei die zweite Linse (200) aus Glas mittels Glasschleifen hergestellt ist und eine Abbe-Zahl größer als 60 aufweist,
- eine dritte Linse (300) mit einem dritten Brennpunkt, welche dritte Linse (300) gesehen in Hauptabstrahlrichtung (X) unmittelbar nach der zweiten Linse (200) angeordnet ist und als asphärische, bikonkave Linse aus Kunststoff ausgebildet ist, wobei die dritte Linse (300) eine Abbe-Zahl von kleiner als 25 aufweist,
- eine vierte Linse (400) mit einem vierten Brennpunkt, welche vierte Linse (400) gesehen in Hauptabstrahlrichtung (X) unmittelbar nach der dritten Linse (300) angeordnet ist und als asphärische, bikonvexe Sammellinse aus Kunststoff ausgebildet ist, und
- eine Blende (500), welche zwischen der dritten und vierten Linse (300, 400) angeordnet ist, wobei die Blende (500) eingerichtet ist, von der dritten Linse (300) in Richtung der vierten Linse (400) abgestrahltes Licht teilweise abzuschirmen, sodass die Blende (500) bei der Ausbildung der Lichtverteilung vor die Beleuchtungsvorrichtung (10) mitwirkt,
wobei die zweite und dritte Linse (200, 300) derart eingerichtet sind, um als achromatisches Linsenpaar (LP1) zur Vermeidung von chromatischer Aberration zusammenzuwirken,
und wobei die dritte und die vierte Linse (300, 400) im Wesentlichen einen gleichen Wärmeausdehnungskoeffizienten aufweisen, wobei die dritte und vierte Linse (300, 400) eingerichtet sind, um als athermisches Linsenpaar (LP2) zur Vermeidung einer Verschiebung des gemeinsamen Brennpunktes (F) bei unterschiedlichen Temperaturen zusammenzuwirken.

2. Beleuchtungsvorrichtung nach Anspruch 1, **dadurch gekennzeichnet, dass** die zweite, dritte und vierte Linse (200, 300, 400) einen Brechungsindex von n ≤ 1,7 aufweisen.

3. Beleuchtungsvorrichtung nach Anspruch 1 oder 2, **dadurch gekennzeichnet, dass** die zweite Linse (200) eine Abbe-Zahl von 60 aufweist, und wobei die dritte Linse (300) eine Abbe-Zahl von 23 aufweist.

4. Beleuchtungsvorrichtung nach einem der Ansprüche 1 bis 3, **dadurch gekennzeichnet, dass** die zweite Linse (200) eine höhere Abbe-Zahl als die dritte Linse (300) aufweist, wobei vorzugsweise die zweite Linse (200) eine höhere Abbe-Zahl als die dritte Linse (300) im Verhältnis 1:2.5, insbesondere 1:3, aufweist.

5. Beleuchtungsvorrichtung nach einem der Ansprüche 1 bis 4, **dadurch gekennzeichnet, dass** die Blende (500) eine Öffnung (510) aufweist, durch welche Licht durchtreten kann.

6. Beleuchtungsvorrichtung nach einem der Ansprüche 1 bis 5, **dadurch gekennzeichnet, dass** eine also hochauflösende Projektions-Beleuchtungsvorrichtung ausgebildet ist.

7. Beleuchtungsvorrichtung nach einem der Ansprüche 1 bis 6, **dadurch gekennzeichnet, dass** die Lichtverteilung eine Abblendlichtverteilung und/oder eine Fernlichtverteilung ist.

8. Beleuchtungsvorrichtung nach einem der Ansprüche 1 bis 7, **dadurch gekennzeichnet, dass** die zumindest eine Lichtquelle (20) als mehrere Leuchtdioden ausgebildet ist, welche vorzugsweise in einer Matrix-Anordnung in Reihen und Spalten angeordnet sind.

9. Beleuchtungsvorrichtung nach einem der Ansprüche 1 bis 8, **dadurch gekennzeichnet, dass** die erste, zweite, dritte und vierte Linse (100, 200, 300, 400) jeweils eine optische Achse aufweisen, wobei die optischen Achsen der Linsen (100, 200, 300, 400) auf einer gemeinsamen optischen Achse (A) liegen bzw. zusammenfallen.

10. Kraftfahrzeugscheinwerfer mit zumindest einer Beleuchtungsvorrichtung nach einem der Ansprüche 1 bis 9.

## Claims

1. Lighting device (10) for a motor vehicle headlamp, the lighting device (10) comprising at least one light source (20) and a projection lens system (50), which projection lens system (50) is set up to project the light of the at least one light source (20) in front of the lighting device (10) in the form of a light distribution in a main radiation direction (X), wherein the projection lens system (50) has a common focal point (F), wherein the at least one light source (20) is arranged in the common focal point (F), and wherein the projection lens system (50) consists of the following:
- a first lens (100) having a first focal point, which first lens (100) is aspherical and made of precision glass by means of precision glass molding and is arranged immediately after the at least one light source (20) in the beam path of the at least one light source (20) when viewed in the main radiation direction (X), wherein the first lens (100) has a convex decoupling surface (110) and a concave coupling surface (120) for increasing the light coupling, and wherein the first lens (100) is arranged to collimate the light of the at least one light source (20) in the direction of the main radiation direction (X), wherein the first lens (100) has a refractive index of n ≥ 1.8,
- a second lens (200) with a second focal point, which second lens (200) is arranged immediately after the first lens (100) as seen in the main direction of radiation (X) and is designed as a spherical biconvex converging lens, the second lens (200) being produced from glass by means of glass grinding and having an Abbe number greater than 60,
- a third lens (300) with a third focal point, which third lens (300) is arranged immediately after the second lens (200) as seen in the main direction of radiation (X) and is designed as an aspherical, biconcave lens made of plastic, the third lens (300) having an Abbe number of less than 25,
- a fourth lens (400) with a fourth focal point, which fourth lens (400) is arranged immediately after the third lens (300) as seen in the main direction of radiation (X) and is designed as an aspherical, biconvex converging lens made of plastic, and
- a diaphragm (500) disposed between the third and fourth lenses (300, 400), the diaphragm (500) being arranged to partially shield light emitted from the third lens (300) towards the fourth lens (400) so that the diaphragm (500) cooperates in forming the light distribution in front of the illumination device (10),
wherein the second and third lenses (200, 300) are arranged to cooperate as an achromatic lens pair (LP1) to avoid chromatic aberration,
and wherein the third and fourth lenses (300, 400) have substantially the same coefficient of thermal expansion, the third and fourth lenses (300, 400) being arranged to cooperate as an athermal lens pair (LP2) for avoiding a shift of the common focal point (F) at different temperatures.

2. Lighting device according to claim 1, **characterized in that** the second, third and fourth lenses (200, 300, 400) have a refractive index of n ≤ 1.7.

3. Lighting device according to claim 1 or 2, **characterized in that** the second lens (200) has an Abbe number of 60, and wherein the third lens (300) has an Abbe number of 23.

4. Lighting device according to one of claims 1 to 3, **characterized in that** the second lens (200) has a higher Abbe number than the third lens (300), the second lens (200) preferably having a higher Abbe number than the third lens (300) in a ratio of 1:2.5, in particular 1:3.

5. Lighting device according to one of claims 1 to 4, **characterized in that** the diaphragm (500) has an opening (510) through which light can pass.

6. Lighting device according to one of claims 1 to 5, **characterized in that** a projection lighting device with high resolution is formed.

7. Lighting device according to one of claims 1 to 6, **characterized in that** the light distribution is a dipped beam distribution and/or a main beam distribution.

8. Lighting device according to one of claims 1 to 7, **characterized in that** the at least one light source (20) is designed as a plurality of light-emitting diodes, which are preferably arranged in a matrix arrangement in rows and columns.

9. Lighting device according to one of claims 1 to 8, **characterized in that** the first, second, third and fourth lenses (100, 200, 300, 400) each have an optical axis, the optical axes of the lenses (100, 200, 300, 400) lying on a common optical axis (A) or coinciding.

10. Motor vehicle headlamp with at least one lighting device according to one of claims 1 to 9.

## Revendications

1. Dispositif d'éclairage (10) pour un phare de véhicule automobile, le dispositif d'éclairage (10) comprenant au moins une source lumineuse (20) et un système de lentilles de projection (50), lequel système de lentilles de projection (50) est conçu pour projeter la lumière de la au moins une source lumineuse (20) sous la forme d'une répartition de lumière devant le dispositif d'éclairage (10) dans une direction de rayonnement principale (X), dans lequel le système de lentilles de projection (50) présente un foyer commun (F), dans lequel la au moins une source lumineuse (20) est disposée dans le foyer commun (F), et dans lequel le système de lentilles de projection (50) est constitué de ce qui suit :
- une première lentille (100) avec un premier foyer, laquelle première lentille (100) est asphérique et fabriquée en verre de précision au moyen de moules à verre de précision et est disposée, vue dans la direction de rayonnement principale (X), immédiatement après la au moins une source lumineuse (20) dans le trajet du faisceau de la au moins une source lumineuse (20), dans lequel la première lentille (100) présente une surface de couplage de sortie convexe (110) et une surface de couplage d'entrée concave (120) pour augmenter le couplage de la lumière, et dans lequel la première lentille (100) est adaptée pour collimater la lumière de la au moins une source de lumière (20) dans la direction de la direction de rayonnement principale (X), la première lentille (100) présentant un indice de réfraction de n ≥ 1,8,
- une deuxième lentille (200) avec un deuxième foyer, laquelle deuxième lentille (200), vue dans la direction principale de rayonnement (X), est disposée immédiatement après la première lentille (100) et est réalisée sous forme de lentille convergente biconvexe sphérique, la deuxième lentille (200) étant fabriquée en verre par meulage du verre et présentant un nombre d'Abbe supérieur à 60,
- une troisième lentille (300) avec un troisième foyer, laquelle troisième lentille (300) est disposée, vue dans la direction principale de rayonnement (X), immédiatement après la deuxième lentille (200) et est réalisée sous forme de lentille biconave asphérique en matière plastique, la troisième lentille (300) présentant un nombre d'Abbe inférieur à 25,
- une quatrième lentille (400) avec un quatrième point focal, laquelle quatrième lentille (400), vue dans la direction principale de rayonnement (X), est disposée immédiatement après la troisième lentille (300) et est conçue comme une lentille convergente asphérique, biconvexe en matière plastique, et
- un diaphragme (500) qui est disposé entre les troisième et quatrième lentilles (300, 400), le diaphragme (500) étant agencé pour protéger partiellement la lumière émise par la troisième lentille (300) en direction de la quatrième lentille (400), de sorte que le diaphragme (500) coopère à la formation de la répartition de la lumière devant le dispositif d'éclairage (10),
les deuxième et troisième lentilles (200, 300) étant agencées de manière à coopérer en tant que paire de lentilles achromatiques (LP1) pour éviter l'aberration chromatique,
et dans lequel les troisième et quatrième lentilles (300, 400) ont sensiblement le même coefficient de dilatation thermique, les troisième et quatrième lentilles (300, 400) étant agencées pour coopérer en tant que paire de lentilles athermiques (LP2) pour éviter un déplacement du point focal commun (F) à des températures différentes.

2. Dispositif d'éclairage selon la revendication 1, **caractérisé en ce que** les deuxième, troisième et quatrième lentilles (200, 300, 400) présentent un indice de réfraction de n ≤ 1,7.

3. Dispositif d'éclairage selon la revendication 1 ou 2, **caractérisé en ce que** la deuxième lentille (200) présente un nombre d'Abbe de 60, et dans lequel la troisième lentille (300) présente un nombre d'Abbe de 23.

4. Dispositif d'éclairage selon l'une des revendications 1 à 3, **caractérisé en ce que** la deuxième lentille (200) présente un nombre d'Abbe supérieur à celui de la troisième lentille (300), de préférence la deuxième lentille (200) présentant un nombre d'Abbe supérieur à celui de la troisième lentille (300) dans un rapport de 1:2,5, notamment de 1:3.

5. Dispositif d'éclairage selon l'une des revendications 1 à 4, **caractérisé en ce que** le diaphragme (500) comporte une ouverture (510) à travers laquelle la lumière peut passer.

6. Dispositif d'éclairage selon l'une des revendications 1 à 5, **caractérisé en ce qu'**il est formé un dispositif d'éclairage par projection donc à haute résolution.

7. Dispositif d'éclairage selon l'une des revendications 1 à 6, **caractérisé en ce que** la répartition de la lumière est une répartition des feux de croisement et/ou une répartition des feux de route.

8. Dispositif d'éclairage selon l'une des revendications 1 à 7, **caractérisé en ce que** ladite au moins une source lumineuse (20) est réalisée sous la forme de plusieurs diodes électroluminescentes, de préférence disposées en rangées et en colonnes selon une disposition matricielle.

9. Dispositif d'éclairage selon l'une des revendications 1 à 8, **caractérisé en ce que** les première, deuxième, troisième et quatrième lentilles (100, 200, 300, 400) présentent chacune un axe optique, les axes optiques des lentilles (100, 200, 300, 400) étant situés ou coïncidant sur un axe optique commun (A).

10. Projecteur de véhicule automobile comportant au moins un dispositif d'éclairage selon l'une des revendications 1 à 9.
